Europäisches Patentamt

European Patent Office

Office européen des brevets

(19)

(11) Veröffentlichungsnummer: **0 173 101**
B1

(12)

# EUROPÄISCHE PATENTSCHRIFT

(45) Veröffentlichungstag der Patentschrift:
28.12.88

(51) Int. Cl.⁴: **B 60 C 9/20**, B 60 C 9/18

(21) Anmeldenummer: 85109635.4

(22) Anmeldetag: 31.07.85

(54) **Fahrzeugluftreifen.**

(30) Priorität: 18.08.84 DE 3430501

(43) Veröffentlichungstag der Anmeldung:
05.03.86 Patentblatt 86/10

(45) Bekanntmachung des Hinweises auf die Patenterteilung:
28.12.88 Patentblatt 88/52

(84) Benannte Vertragsstaaten:
AT BE CH DE FR GB IT LI LU NL SE

(56) Entgegenhaltungen:
EP-A- 0 072 500
DE-U- 8 103 929

(73) Patentinhaber: **Continental Aktiengesellschaft,
Königsworther Platz 1, D-3000 Hannover 1 (DE)**

(72) Erfinder: **Rohde, Dieter, Dipl.-Ing.,
Windmühlenstrasse 4, D-3160 Lehrte (DE)**
Erfinder: **Praetorius, Siegfried, Wasserlöse Nr. 17,
D-3013 Barsinghausen 4 (DE)**

## Beschreibung

Die Erfindung betrifft einen Fahrzeugluftreifen mit einem zugfesten Gürtel zwischen dem Laufstreifen und der Radialkarkasse und mit zu beiden Seiten seines Laufstreifens befindlichen schulterartigen, durch Stufung gebildeten, mit der Fahrbahn nicht in Berührung kommenden Verbreiterungen, von denen aus sich die Reifenseitenwände radial nach innen zu den Reifenwülsten hin erstrecken, wobei sich die Gürtelränder bis in den Bereich der Verbreiterung erstrecken und die senkrechten Stufenflächen der Verbreiterung um ein Mass zur Seite hin überragen, das etwa 25 bis 40% desjenigen Masses beträgt, um das die ausgebauchten Reifenseitenwände an ihrer breitesten Stelle die senkrechte Stufenfläche überragen.

Fahrzeugluftreifen dieser Art (vgl. z.B. EP-A 0 072 500) verfügen über eine günstige Versteifung der Laufstreifenzone, was zu einem günstigen Abriebbild des Laufstreifens führt. Zugleich wird durch die Schulterstufe in Verbindung mit dem vergleichsweise breiten Gürtel schwingungsmässig eine Abkopplung der Laufstreifenpartie gegenüber der Seitenwandpartie des Reifens gefördert.

Der Erfindung liegt im wesentlichen die Aufgabe zugrunde, die eingangs erwähnten Reifen so zu verbessern, dass nicht vermeidbare Verformungen der Laufstreifenzone nicht zu unerwünschter Wärmebildung führen, um so auch den Rollwiderstand zu verringern.

Um dieses Ziel zu erreichen, ist erfindungsgemäss zumindest zwischen zwei Gürtellagen eine dämpfungsarme Gummischicht angeordnet, deren Wandstärke zumindest in etwa dem Durchmesser der Gürtelfestigkeitsträger entspricht, jedoch eine Wandstärke von 5 mm nicht übersteigt und die sich praktisch zu der Ebene zu beiden Seiten des Reifens erstreckt, die durch die senkrechte Stufenfläche bestimmt ist, wobei sich an diese weichere dämpfungsarme Gummischicht im Bereich der beiden Gürtelränder streifenförmige Randabschnitte in Fortsetzung anschliessen, die auf halber Breite noch zwischen den Gürtellagen angeordnet sind und mit ihrer halben Breitenerstreckung weiter in die Verbreiterung hineinragen und dabei auch die etwa waagrechte Stufenfläche noch seitlich überragen.

Wichtig ist dabei, dass eine sich über die gesamte Gürtelbreite erstreckende dämpfungsarme Zwischenschicht nicht die beste Lösung bringen kann, weil eine solche dämpfungsarme Zwischenschicht ausserstande ist, die im Bereich der Gürtelränder entstehende Beanspruchung in ausreichender Weise abzufangen. Aus diesem Grunde befindet sich ausser der erwähnten dämpfungsarmen Gummischicht im Bereich der Gürtelränder ein streifenförmiger Randabschnitt in Fortsetzung der dämpfungsarmen Zwischenschicht. Die im Bereich der Gürtelränder vorgesehenen zusätzlichen Gummistreifen können die Dauerstandsfestigkeit im Gürtelrandbereich dann am besten erhöhen, wenn sie auf halber Breite zwischen den Gürtellagen angeordnet und mit dem übrigen Teil ihrer Breite in die unterhalb der Stufung befindlichen Schulterabschnitte des Reifens hineinragen. Überraschenderweise hat sich gezeigt, dass die erwähnten streifenförmigen Randabschnitte, die vergleichsweise härter eingestellt werden als die dazu befindliche dämpfungsarme Schicht, die vorerwähnte Isolationswirkung, also die Wirkung der dämpfungsarmen Zwischenschicht nicht nennenswert beeinflussen. Bei guter Isolationswirkung wird somit eine überragende Dauerstandsfestigkeit im Gürtelrandbereich erzielt.

Weitere Einzelheiten der Erfindung werden anhand der Zeichnung erläutert, in der ein Ausführungsbeispiel der Erfindung dargestellt ist. Es zeigen:

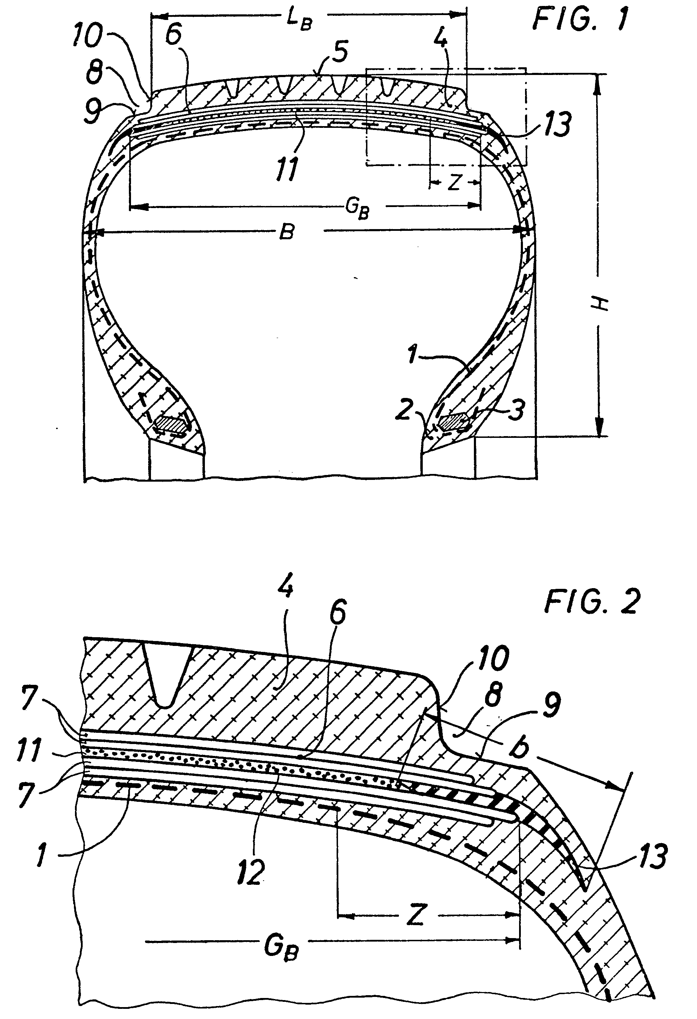

Fig. 1 einen radialen Teilschnitt durch einen Fahrzeugluftreifen und

Fig. 2 die in Fig. 1 durch einen gestrichelten Linienzug umgrenzte Schulterpartie des Reifens im radialen Schnitt in vergrössertem Massstab.

Der Reifenkörper besteht im wesentlichen aus Gummi oder gummiähnlichen Stoffen. Er ist durch Verstärkungseinlagen verfestigt, die mit dem Gummi oder dergl. durch Vulkanisation fest verbunden sind. Die Ränder der Radialkarkasse 1 sind in den Reifenwülsten 2 durch Umschlingen der Wulstkerne 3 verankert. Der Laufstreifen 4 ist nach aussen durch die Lauffläche 5 begrenzt. Zwischen diesem Laufstreifen 4 und der Radialkarkasse 1 befindet sich ein in Umfangsrichtung zugfester Gürtel 6 aus vier übereinanderliegenden Cordgewebelagen 7, deren Festigkeitsträger in jeder Lage parallel zueinander verlaufen, deren Festigkeitsträger aber in bezug auf die benachbarte Lage mit der Reifenumfangsrichtung abweichende Winkel einschliessen.

Vorzugsweise bilden die beiden oberen Lagenpaare einerseits und die beiden unteren Lagenpaare andererseits symmetrische Kreuzverbände.

Die Breite des Reifens ist mit B bezeichnet, die Höhe mit H. Das Verhältnis H zu B ist bei dem hier geschilderten Reifen für Lastkraftwagen kleiner als 85%.

Für den erfindungsgemässen Reifen ist eine Stufe 8 zu beiden Rändern des Laufstreifens 4 von Bedeutung. Sie hat eine im wesentlichen zylindrische, etwa parallel zur Lauffläche 5 verlaufende Grundfläche 9 und eine etwa senkrechte Stufenfläche 10, die die effektive Breite des Laufstreifens 4 – mit $L_B$ bezeichnet – bestimmt.

Die Bemessung der Stufe 8 ist so vorgenommen, dass unter Berücksichtigung der Profilierung des Laufstreifens 4 die Grundfläche 9 unter normalen Fahrbedingungen nicht mit der Fahrbahn in Berührung kommt.

Die Gürtelbreite $G_B$ und die etwa auf halber Höhe des Reifenquerschnitts gemessene grösste Breite des Reifenkörpers sollen in bezug auf die Laufstreifenbreite $L_B$ bestimmte Relationen zueinander aufweisen.

2

Die Breite B ist so gewählt, dass

$$\frac{G_B - L_B}{B - L_B} = 0{,}25 \div 0{,}4$$

vorzugsweise aber einen Wert von 0,3 ergibt. Dies bedeutet, dass die Zone Z, in der der Gürtelrand im Winkel zur Karkasse 1 verläuft, vergleichsweise klein ist und vorzugsweise nur etwa das Doppelte des Masses beträgt, um das der Gürtelrand gegenüber der senkrechten Stufenfläche 10 vorspringt. Damit ist ein entsprechend kleiner Stützgummi in Form der üblichen Unterleggummistreifen ausreichend. Zudem ergibt sich eine vergleichsweise grosse Ausbauchung durch die Breite B des Reifens.

Die vorbeschriebene Stufenausbildung in Verbindung mit der erwähnten Schultergestaltung führt zu einer erheblichen Verminderung des Rollwiderstandes, wenn die nachstehend aufgeführten Merkmale erfüllt sind.

Vorgesehen ist eine zwischen dem oben gelegenen Lagenpaar einerseits und dem unten gelegenen Lagenpaar des Gürtels 6 andererseits befindliche Gummischicht 11, die von einem Mittelstreifen 12 und zwei seitlichen Streifen 13 gebildet ist. Die Breite b der Streifen 13 beträgt etwa ⅙ des Masses $G_B$. Zudem sind die Streifen 13 so mit dem Gürtel 6 verschachtelt, dass die Streifen 13 über ihre halbe Breite zwischen den Cordgewebelagen 7 angeordnet sind und mit dem übrigen Teil ihrer Breite den Gürtel 6 überragen, also in die Schulterzone nahe unterhalb der Fläche 9 der Stufe 8 hineinragen. Dabei hat der überstehende, der den Gürtel 6 überragende Randabschnitt des Streifens 13 einen Verlauf, der im wesentlichen dem Karkassverlauf im Schulterbereich entspricht.

Die Schicht 12 hat eine Härte Shore A zwischen 40 bis 50, vorzugsweise aber 48 Shore. Die Härte der Streifen 13 ist hingegen 58 bis 80, vorzugsweise etwa 65 bis 70 Shore A. Darüber hinaus haben die im Schulterbereich befindlichen Gummischichten, welche den Streifen 13 umschliessen, eine Härte, die etwa um 5 bis 15 Shore A geringer ist als die Härte des Streifens 13, wobei der Laufstreifen 4 vorzugsweise eine Härte von 60 bis 65 Shore A erhalten soll.

Die Schicht 12 soll (gemessen nach DIN 53512) eine Rückprallelastizität von 60 bis 70% erhalten, der Streifen 13 eine Rückprallelastizität von 40 bis 50%, während der Laufstreifen 4 eine Rückprallelastizität von 40% aufweist. Die die äusseren Streifenränder umschliessenden Gummischichten haben daher im Vergleich zu den Streifen 12 eine um etwa 10 bis 30% kleinere Rückprallelastizität.

## Patentansprüche

1. Fahrzeugluftreifen mit einem zugfesten Gürtel (6) zwischen dem Laufstreifen (4) und der Radialkarkasse (1) und mit zu beiden Seiten seines Laufstreifens befindlichen schulterartigen, durch Stufung (8) gebildeten, mit der Fahrbahn nicht in Berührung kommenden Verbreiterungen, von denen aus sich die Reifenseitenwände radial nach innen zu den Reifenwülsten (2) hin erstrecken, wobei sich die Gürtelränder bis in den Bereich der Verbreiterung erstrecken und die senkrechten Stufenflächen (10) der Verbreiterung um ein Mass zur Seite hin überragen, das etwa 25 bis 40% desjenigen Masses beträgt, um das die ausgebauchten Reifenseitenwände an ihrer breitesten Stelle die senkrechte Stufenfläche überragen, dadurch gekennzeichnet, dass zumindest zwischen zwei Gürtellagen (7) eine dämpfungsarme Gummischicht (12) angeordnet ist, deren Wandstärke zumindest in etwa dem Durchmesser der Gürtelfestigkeitsträger entspricht, jedoch eine Wandstärke von 5 mm nicht übersteigt und die sich praktisch zu der Ebene zu beiden Seiten des Reifens erstreckt, die durch die senkrechte Stufenfläche (10) bestimmt ist, wobei sich an diese weichere dämpfungsarme Gummischicht (12) im Bereich der beiden Gürtelränder streifenförmige Randabschnitte (13) in Fortsetzung anschliessen, die auf halber Breite noch zwischen den Gürtellagen (7) angeordnet sind und mit ihrer halben Breitenerstreckung weiter in die Verbreiterung hineinragen und dabei auch die etwa waagerechte Stufenfläche (9) noch seitlich überragen.

2. Reifen nach Anspruch 1, dadurch gekennzeichnet, dass die den Gürtel (6) seitlich überragenden Teile der Randabschnitte (13) radial nach innen abgebogen sind und in etwa parallel zur Radialkarkasse (1) des Reifens verlaufen.

3. Reifen nach Anspruch 1, dadurch gekennzeichnet, dass die Breite (b) der Randabschnitte (13) im wesentlichen ⅙ der Gürtelbreite ($G_B$) entspricht.

4. Reifen nach Anspruch 1, dadurch gekennzeichnet, dass die Randabschnitte (13) eine Härte von etwa 58 bis 80 Shore A haben und die zwischen ihnen liegende Gummischicht (12) eine Härte von etwa 40 bis 50 Shore A.

5. Reifen nach Anspruch 1, dadurch gekennzeichnet, dass die Randabschnitte (13) eine Rückprallelastizität von 40 bis 50% (DIN 53512) und die zwischen ihnen liegende Schicht (12) eine Rückprallelastizität von 60 bis 70% aufweisen.

6. Reifen nach Anspruch 1, dadurch gekennzeichnet, dass die die Randabschnitte (13) umschliessenden Gummischichten der Reifenschulterzone wesentlich weicher sind als die Randabschnitte (13), und dass die Härteunterschiede etwa 5 bis 15 Shore A betragen.

## Claims

1. Pneumatic vehicle tyre having a substantially inextensible belt (6) between the tread strip (4) and the radial carcase (1) and having shoulder-like widened portions, which are situated on both sides of its tread strip, are formed by stepped arrangement (8) and do not come into contact with the roadway, the lateral walls of the tyre extending radially inwardly from said widened portions to the tyre beads (2), wherein the belt edges extend into the vicinity of the widened portion, and the vertical step faces (10) of the widened portion protrude laterally for a distance which amounts to approximately 25 to 40% of the distance by which the bulged lateral walls of the tyre protrude beyond the vertical step face at their widest point, characterised in that a low-damping rubber layer (12) is disposed between at least two belt plies (7), the wall thickness of said rubber layer corresponding at least approximately to the diameter of the belt reinforcing members, but not exceeding a wall thickness of 5 mm, and the rubber layer extends virtually to the plane at both sides of the tyre, which plane is determined by the vertical step face (10), wherein strip-like edge portions (13) form an extension of, and are connected to, this softer, low-damping rubber layer (12) in the region of the two belt edges, which edge portions are disposed with half their width still between the belt plies (7) and protrude further into the widened portion with half their width extension, thereby also still protruding laterally beyond the substantially horizontal step face (9).

2. Tyre according to claim 1, characterised in that the parts of the edge portions (13) protruding laterally beyond the belt (6) are bent radially inwardly and extend substantially parallel to the radial carcase (1) of the tyre.

3. Tyre according to claim 1, characterised in that the width (b) of the edge portions (13) corresponds to substantially 1/6th of the belt with ($G_B$).

4. Tyre according to claim 1, characterised in that the edge portions (13) have a hardness of approximately 58 to 80 Shore A, and the rubber layer (12), situated between said edge portions, has a hardness of approximately 40 to 50 Shore A.

5. Tyre according to claim 1, characterised in that the edge portions (13) have a rebound resilience of 40 to 50% (DIN 53512), and the layer (12) situated between them has a rebound resilience of 60 to 70%.

6. Tyre according to claim 1, characterised in that the rubber layers of the shoulder zone of the tyre, which surround the edge portions (13), are substantially softer than the edge portions (13), and in that the differences in hardness amount to approximately 5 to 15 Shore A.

**Revendications**

1. Pneumatique d'automobile comportant une ceinture (6) résistante à la traction entre la bande de roulement (4) et la carcasse radiale (1), et des prolongements n'entrant pas en contact avec la route, en forme de marche (8) et d'épaulement, situés des deux côtés de la bande de roulement, à partir desquels les flancs du pneumatique s'étendent radialement vers l'intérieur jusqu'aux talons (2), de telle sorte que les bords de la ceinture s'étendent jusque dans la zone du prolongement, et que les surfaces de marche verticales (10) se dressent à une distance des flancs qui correspond à environ 25 à 40% de la dimension correspondant à la distance entre cette surface de marche verticale et le point de renflement maximal du flanc du pneumatique, caractérisé en ce que, au moins entre deux nappes (7), est disposée une couche de caoutchouc (12) ayant peu d'amortissement, dont l'épaisseur correspond au diamètre des renforts des nappes, mais cependant ne dépasse pas une épaisseur de 5 mm, et qui s'étend pratiquement jusqu'au niveau des deux flancs du pneumatique, qui est défini par les surfaces de marche verticales (10), et en ce que des secteurs latéraux (13) en forme de bande se raccordent en prolongement à cette couche de caoutchouc (12) ayant peu d'amortissement, dans la zone des bords des nappes, qui sont disposés pour moitié de leur largeur encore entre les couches de nappes (7), et qui pour moitié de leur développement s'étendent dans le prolongement et dépassent ainsi latéralement la surface de marche sensiblement horizontale (9).

2. Pneumatique selon la revendication 1, caractérisé en ce que les parties des secteurs latéraux (13) dépassant latéralement la ceinture (6) sont incurvés radialement vers l'intérieur, et s'étendent sensiblement parallèlement à la carcasse radiale (1) du pneumatique.

3. Pneumatique selon la revendication 1, caractérisé en ce que la largeur (b) des secteurs latéraux (13) correspond essentiellement à ⅙ de la largeur de ceinture ($G_B$).

4. Pneumatique selon la revendication 1, caractérisé en ce que les secteurs latéraux (13) ont une dureté d'environ 58 à 80 Shore A, et que la couche de caoutchouc (12) qui se trouve entre eux a une dureté d'environ 40 à 50 Shore A.

5. Pneumatique selon la revendication 1, caractérisé en ce que les secteurs latéraux (13) ont une élasticité de rebondissement de 40 à 50% (DIN 53512), et que ia couche (12) située entre eux a une élasticité de rebondissement de 60 à 70%.

6. Pneumatique selon la revendication 1, caractérisé en ce que les couches de caoutchouc de la zone d'épaulement du pneumatique entourant les secteurs latéraux (13) sont nettement plus souples que les secteurs latéraux (13), et que les différences de dureté sont d'environ 5 à 15 Shore A.

FIG. 1

FIG. 2